# EUROPÄISCHE PATENTSCHRIFT

(11) **EP 1 312 852 B1**
(45) Veröffentlichungstag und Bekanntmachung des Hinweises auf die Patenterteilung: **14.09.2005**
(21) Anmeldenummer: 02025804.2
(22) Anmeldetag: 18.11.2002
(51) Int. Cl.: F16M 11/24, F16M 13/02

(54) **System zur Bildung einer Standwand für Flachbildschirmgeräte**
Device for forming a support wall for flat panel displays
Dispositif pour la formation d'une paroi support pour écrans plats

(30) Priorität: 19.11.2001 DE 20118841 U
(43) Veröffentlichungstag der Anmeldung: 21.05.2003
(73) Patentinhaber: Novus Sträter GmbH, 58540 Meinerzhagen (DE)
(72) Erfinder: Sträter, Uwe, 58540 Meinerzhagen (DE)
(74) Vertreter: Patentanwälte Dr. Solf & Zapf

(56) Entgegenhaltungen:
- EP-A- 1 139 003
- WO-A-01/35796
- DE-A- 19 748 480
- US-A- 4 523 683
- US-A- 5 687 939
- US-A- 5 904 328
- US-A- 6 119 317
- PATENT ABSTRACTS OF JAPAN vol. 2000, no. 04, 31. August 2000 (2000-08-31) & JP 2000 029397 A (PURSE JAPAN:KK), 28. Januar 2000 (2000-01-28)

## Beschreibung

Die vorliegende Erfindung betrifft ein System zur Bildung einer Standwand für Flachbildschirmgeräte, umfassend einen säulenartigen Ständer sowie Befestigungsmittel zur stufenlosen höhenverstellbaren Befestigung von Gegenständen, wie Befesfigungsarmen für die Flachbildschirmgerätenach dem Oberbegriff des Anspruchs 1.

Standwände mit Flachbildschirmen werden insbesondere in Büros, in Banken und Börsen, in Kontrollräumen, an Empfangsplätzen oder in Kliniken eingesetzt. Durch die Möglichkeit eines übersichtlichen und auch oft möglichst großformatigen Displays sollen sie dabei mithelfen, die Arbeit bequem und angenehm zu machen bzw. die Orientierung zu erleichtern. Hierbei besteht die Forderung nach einer platzsparenden und möglichst leichten, jedoch stabilen, Bauweise.

Ein bekanntes System zur Bildung einer Standwand ist beispielsweise in der Firmenschrift "Smart Arm" (Technology Desking Ltd., London, 2000) beschrieben. An einem dem System zugehörigen Ständer können jeweils an einem Verbindungsarm mehrere Monitore übereinander oder mittels zwei Verbindungsarmen, die an einer gemeinsamen, den Ständer umfassenden Muffe befestigt sind, auch nebeneinander montiert werden. Als Befestigungsmöglichkeiten des Ständers an einem Tisch werden Klammem für eine Kante einer Arbeitsfläche oder für ein vorgebohrtes Loch im Tisch beschrieben. Auch Befestigungsmöglichkeiten an einer Wand oder an einem Paneel sind vorgesehen. Durch das beschriebene System soll insbesondere den Bedürfnissen nach hoher Flexibilität, Einstellbarkeit der Position der Bildschirme, einer vollständigen Verkabelung, Langlebigkeit, bequemer Handhabung beim Einsatz und Dauerhaftigkeit bei der Verwendung, im Besonderen bei der Bildung von Standwänden mit Mehrfach-Monitor-Feldern, Rechnung getragen werden. Das System ist für eine Montage von 13-Zoll- bis 21-Zoll-Bildschirmen ausgerichtet, wobei gegossene oder extrudierte Aluminiumteile Verwendung finden.

Aus dem Dokument US-A-6 119 317 ist ein gattungsgemäßes System zur Bildung einer Standwand bekannt. Bei diesem bekannten System ist die Klemmeinrichtung nach der Entarretierung des Nutsteins in der Nut frei beweglich und kann so unter der Last eines zu tragenden Gerätes in unerwünschter Weise mitsamt allen daran befestiften Einrichtungen in der Nut nach unten gleiten.

Der Erfindung liegt die Aufgabe zugrunde, ein System der eingangs beschriebenen Art zu schaffen, das sich bei Bewahrung der Vorteile des bekannten Standes der Technik durch eine erhöhte Flexibilität und Montagefreundlichkeit auszeichnet.

Erfindungsgemäß wird dies durch ein System mit den Merkmalen des Anspruchs 1 gelöst.

Mittels des erfindungsgemäßen Systems ist es vorteilhafterweise möglich, zumindest zwei Bildschirmgeräte separat in horizontaler Position nebeneinander an dem Ständer zu installieren. Entsprechende Montage- bzw. Demontagevorgänge erfordern keine speziellen, auf zwei Geräte hin ausgerichtete Befestigungselemente, wodurch eine hohe Flexibilität und Variabilität des Systems gegeben ist. Die Klemmmittel umfassen dabei einen formschlüssig an den Querschnitt der Führungsnuten angepaßten Nutstein, der jeweils mittels eines Klemmbolzens in einer Führungsnut arretierbar ist, wobei zu diesem Zweck die Führungsnut Hinterschneidungen der Umfangskontur der Säule aufweist. Dadurch, daß der Nutstein mittels zweier mit einem Befestigungsarm verbundener Befestigungselemente in der Führungsnut gehalten wird, wobei die Befestigungselemente aus einem im oberen Bereich des Nutsteins endseitig mit dem Nutstein verschraubten Schraubbolzen und dem im unteren Bereich des Nutsteins, verschraubten Klemmbolzen gebildet sind und wobei der Schraubbolzen den Nutstein längsbeweglich in der Führungsnut hält, solange der Klemmbolzen nicht angezogen ist, wird erfindungsgemäß eine leichte und sichere stufenlose Höhenverstellbarkeit errreicht.

In einer besonders vorteilhaften Ausführungsform des erfindungsgemäßen Systems sind ein abgewinkelter Nutstein und ein Schnellspannbolzen mit einer Spannkontur vorhanden, die derart zusammenwirken, dass eine hebelartige Kraftübertragung auf ein Befestigungselement erfolgen kann. Dadurch entfällt eine zusätzliche Einstellung des Befestigungselementes ab Werk.

Es ist auch möglich, daß drei oder mehr, vorzugsweise vier um jeweils 90° gegeneinander versetzte, Führungsnuten vorgesehen sind, wodurch sich die Anzahl der separat nebeneinander montierbaren Flachbildschirmgeräte noch erhöht.

Weitere vorteilhafte Ausgestaltungsmerkmale der Erfindung sind in den Unteransprüchen sowie der folgenden Beschreibung enthalten.

Anhand zweier in der Zeichnung dargestellter, bevorzugter Ausführungsbeispiele soll im folgenden die Erfindung näher erläutert werden. Dabei zeigen:
- Fig. 1: eine perspektivische Ansicht eines Ausschnitts einer ersten Ausführung eines erfindungsgemäßen Systems,
- Fig. 2: in verkleinertem Maßstab, eine weitere perspektivische Ansicht der ersten Ausführung eines erfindungsgemäßen Systems,
- Fig. 3: eine Draufsicht auf ein erfindungsgemäßes System (repräsentativ für die erste und für die zweite Ausführung) zur Veranschaulichung des jeweiligen Schnittverlaufes in Fig. 4 und 10,
- Fig. 4: einen Schnitt durch die erste Ausführung des erfindungsgemäßen Systems gemäß der Linie A-A in Fig. 3,
- Fig. 5: eine perspektivische Darstellung einer ersten Variante einer unter Verwendung der ersten Ausführung des erfindungsgemäßen Systems gebildeten Standwand für Flachbildschirmgeräte,
- Fig. 6: eine perspektivische Darstellung einer zweiten Variante einer unter Verwendung der ersten Ausführung des erfindungsgemäßen Systems gebildeten Standwand für Flachbildschirmgeräte,
- Fig. 7: eine gleichermaßen für die Darstellungen in Fig. 5 und 6 charakteristische Draufsicht auf die Standwand,
- Fig. 8: eine perspektivische Ansicht eines Ausschnitts einer zweiten Ausführung eines erfindungsgemäßen Systems,
- Fig. 9: in verkleinertem Maßstab, eine weitere perspektivische Ansicht der zweiten Ausführung eines erfindungsgemäßen Systems,
- Fig. 10: einen Schnitt durch die zweite Ausführung des erfindungsgemäßen Systems gemäß der Linie A-A in Fig. 3,
- Fig. 11: eine perspektivische Darstellung einer ersten Variante einer unter Verwendung der zweiten Ausführung des erfindungsgemäßen Systems gebildeten Standwand für Flachbildschirmgeräte,
- Fig. 12: eine perspektivische Darstellung einer zweiten Variante einer unter Verwendung der zweiten Ausführung des erfindungsgemäßen Systems gebildeten Standwand für Flachbildschirmgeräte,
- Fig. 13: eine gleichermaßen für die Darstellungen in Fig. 11 und 12 charakteristische Draufsicht auf die Standwand,
- Fig. 14: eine weitere Ausführungsform einer Feststellvorrichtung des erfindungsgemäßen Systems in gelöster Stellung alternativ zu der in Fig. 4 dargestellten Variante,
- Fig. 15: eine Darstellung der Feststellvorrichtung gemäß Fig. 14 in Arretierungsstellung,
- Fig. 16: eine perspektivische Darstellung der Feststellvorrichtung als Schnellspannvorrichtung gemäß Fig. 14 und Fig. 15.

In den verschiedenen Figuren der Zeichnung sind gleiche Teile mit denselben Bezugszeichen versehen, so daß sie in der Regel auch jeweils nur einmal beschrieben werden.

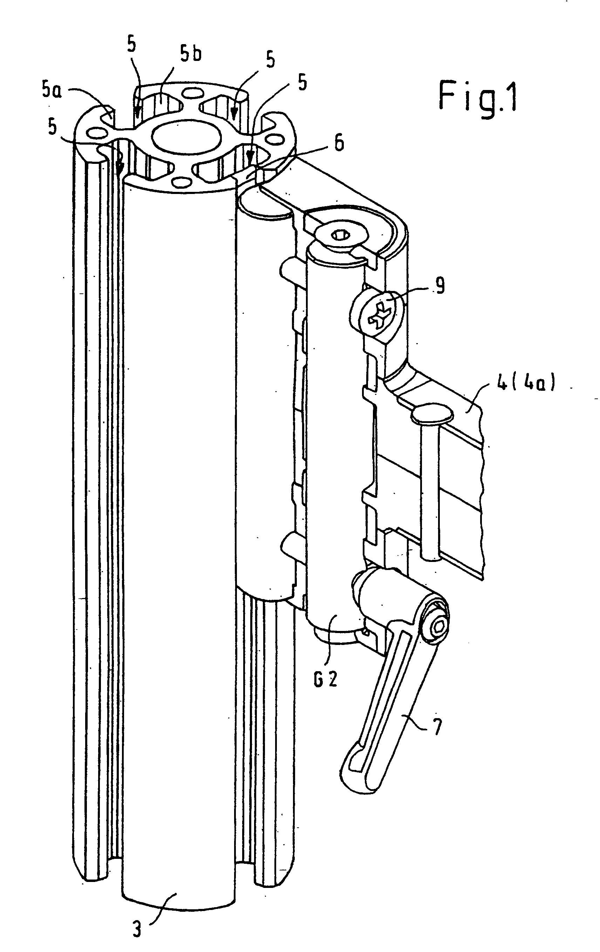

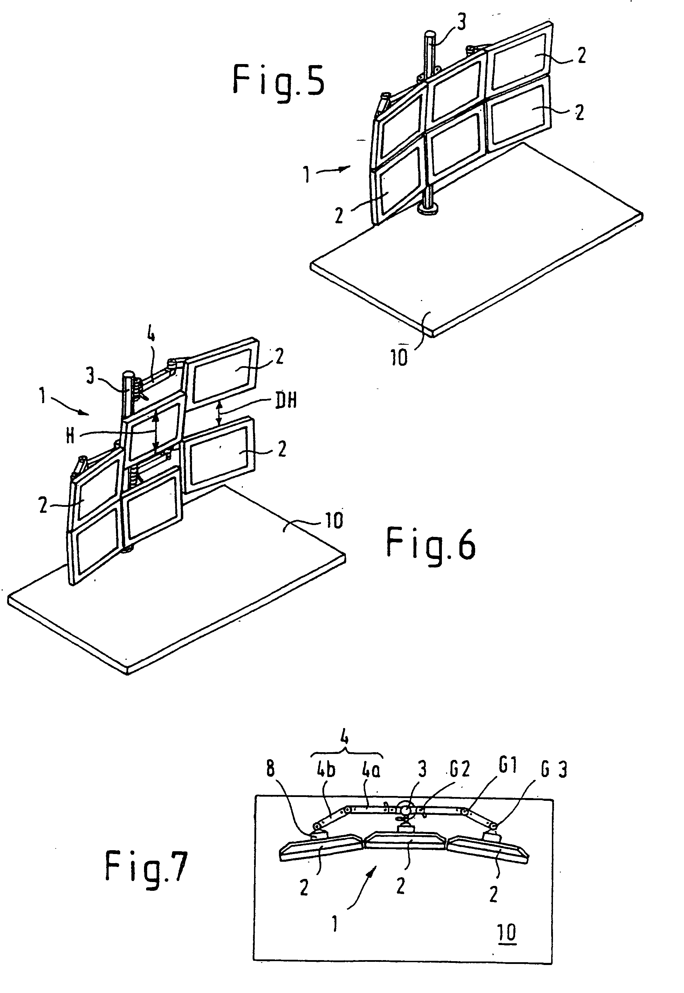

Die Fig. 1 bis 7 zeigen eine erste Ausführung eines erfindungsgemäßen Systems, wobei in Fig. 1 bis 4 verschiedene Einzelheiten dargestellt sind und Fig. 5 bis 7 den Einsatz des Systems zur Bildung einer Standwand 1 für Flachbildschirmgeräte 2 veranschaulichen.

Wie zunächst Fig. 1 bis 3 zeigen, umfaßt das System einen säulenartigen Ständer 3 sowie Befestigungsmittel zur stufenlosen höhenverstellbaren Befestigung von Gegenständen, wie Befestigungsarme 4 für die Flachbildschirmgeräte 2.

Der im Sinne einer Leichtbauweise bevorzugt als Hohlprofil ausgebildete Ständer 3 (Fig. 1) weist in seiner Umfangskontur mindestens zwei, in der dargestellten Ausführung vier, in Ständerlängsrichtung verlaufende Führungsnuten 5 auf. Die Führungsnuten 5 können dabei für eine nicht nur kraftschlüssige, sondern auch formschlüssige Befestigung der Befestigungsmittel - wie insbesondere ebenfalls aus Fig. 1 hervorgeht - Hinterschneidungen 5a, 5b der Umfangskontur des Ständers 3 aufweisen.

Die Befestigungsmittel weisen Klemmittel zur kraftschlüssigen Befestigung auf, die in den Führungsnuten 5 geführt sind und die mit den Führungsnuten 5 zusammenwirken. Bevorzugt können diese Klemmittel - wie dargestellt - jeweils einen formschlüssig an den Querschnitt der Führungsnuten 5 angepaßten Nutstein 6 umfassen, der jeweils mittels eines Klemmbolzens 7 in einer Führungsnut 5 arretierbar ist.

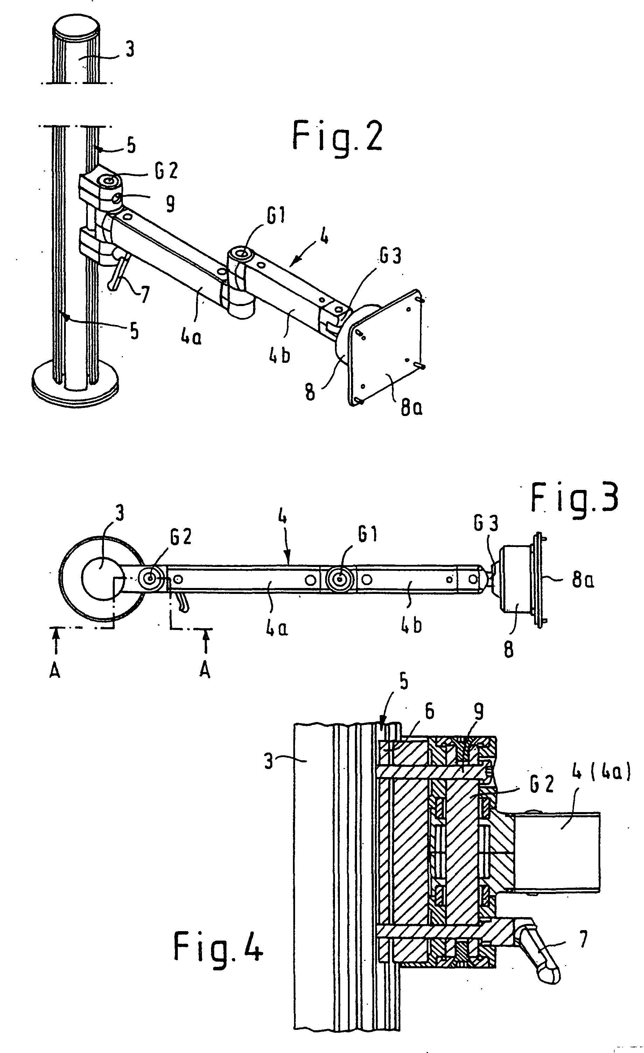

Mittels des Nutsteins sind am Ständer 3 die Befestigungsarme 4 festlegbar, die jeweils aus zwei Hebelabschnitten 4a, 4b gebildet sind, die gelenkig miteinander verbunden sind. Das entsprechende Gelenk ist in den dargestellten Ausführungen ein Scharniergelenk, dessen Schwenkachse parallel zur Längsachse des Ständers 3 verläuft. Es ist mit dem Bezugszeichen G1 bezeichnet (Fig. 2, 3).

Des weiteren sind an jedem Befestigungsarm 4 , an mindestens einem seiner Enden, vorzugsweise - wie dargestellt - an beiden Enden, Verbindungsgelenke G2, G3 zur mittelbaren oder unmittelbaren gelenkigen Befestigung am Ständer 3 und am Flachbildschirmgerät 2 angeordnet. Ein Verbindungsgelenk G2 des Befestigungsarmes 4 dient zur gelenkigen Befestigung am Ständer 3 und ist (wie das Gelenk G1 zwischen den Hebelabschnitten 4a, 4b) als Scharniergelenk ausgebildet. Das andere Verbindungsgelenk G3 des Befestigungsarmes 4 dient zur gelenkigen Befestigung am Flachbildschirmgerät 2 und ist als Kugel- oder Kardangelenk ausgebildet. In diesem Gelenk G3 ist am Befestigungsarm 4 ein Montageteil 8 für das Flachbildschirmgerät 2 gelenkig gehaltert, welches beispielsweise eine Verbindungseinrichtung 8a, beispielsweise eine an sich bekannte Schnellverbindungsplatte, umfassen kann.

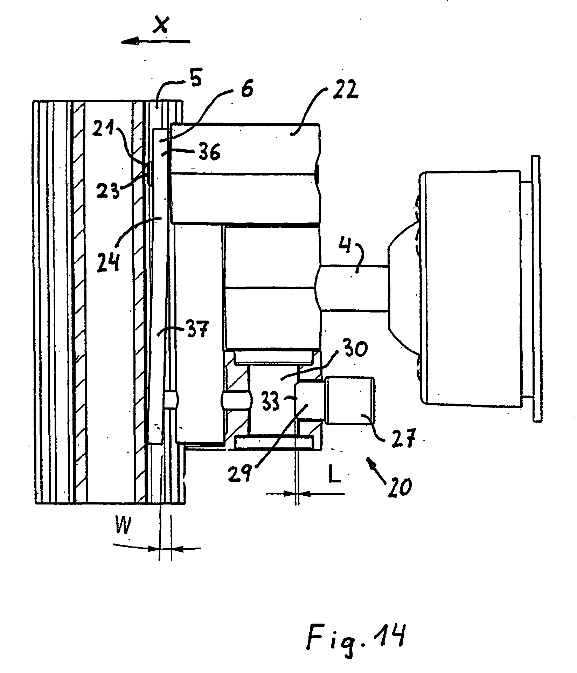

Fig. 4 zeigt - wie bereits erwähnt - eine geschnittene Detailvergrößerung durch Fig. 3 entlang der Schnittlinie A-A. Das Detail bezieht sich dabei auf die Festlegung des Befestigungsarmes 4 am Ständer 3. Diese Darstellung zeigt eine erste Variante einer Feststellvorrichtung. Eine zweite Ausführungsform der Feststellvorrichtung wird später an Hand der Figuren 14 bis 16 näher erläutert. Die Darstellung gemäß Fig. 4 gibt einen Schnitt durch das erwähnte, am Ende des Befestigungsarmes 4 befindliche, an sich bekannte Scharniergelenk G2 wieder, welches in seinem oberen Teil (oberhalb des Befestigungsarmes 4) von einem Schraubbolzen 9 durchgriffen wird, der endseitig mit dem Nutstein 6 verschraubt ist und diesen in seinem oberen Bereich in der Führungsnut 5 hält. In seinem unteren Bereich (unterhalb des Befestigungsarmes 4) wird das Schamiergelenk G2 von dem Klemmbolzen 7 durchgriffen, welcher ebenfalls endseitig mit dem Nutstein 6 verschraubt ist und bei seinem Anziehen den Nutstein 6 klemmend in der Führungsnut 5 festlegt. Solange der Klemmbolzen 7 nicht angezogen ist, sind die Befestigungsmittel am Ständer 3 stufenlos höhenverstellbar. Der Nutstein 6 wird somit durch zwei Befestigungselemente 7, 9 gehalten - den Klemmbolzen 7 und den Schraubbolzen 9, wobei der Klemmbolzen 7 im Gegensatz zu dem in fester Position verschraubten Schraubbolzen 9 einen (nicht näher bezeichneten) Handgriff zur Vornahme der Klemmung bzw. zur Entarretierung des Nutsteins 6 aufweist.

Den beiden in Fig. 5 bis 7 dargestellten Varianten von unter Verwendung der ersten Ausführung des erfindungsgemäßen Systems gebildeten Standwänden 1 für Flachbildschirmgeräte 2 ist gemeinsam, daß jeweils drei Flachbildschirmgeräte 2 nebeneinander angeordnet sind, sie unterscheiden sich jedoch dadurch, daß in der ersten Variante (Fig. 5) die Flachbildschirmgeräte 2 (Monitore) schachbrettartig, in "Zeilen" und "Spalten" angeordnet sind, während die Flachbildschirmgeräte 2 in der zweiten Variante (Fig. 6) zwar in "Spalten" (vgl. auch Fig. 7), jedoch nicht in "Zeilen" angeordnet sind. In der zweiten Variante weisen die Flachbildschirmgeräte 2 in den nebeneinander angeordneten "Spalten" einen Höhenversatz DH auf, der kleiner ist, als die Höhe H eines Flachbildschirmgerätes 2. In der Möglichkeit dieser Anordnung zeigt sich ein weiterer Vorteil des erfindungsgemäßen Systems.

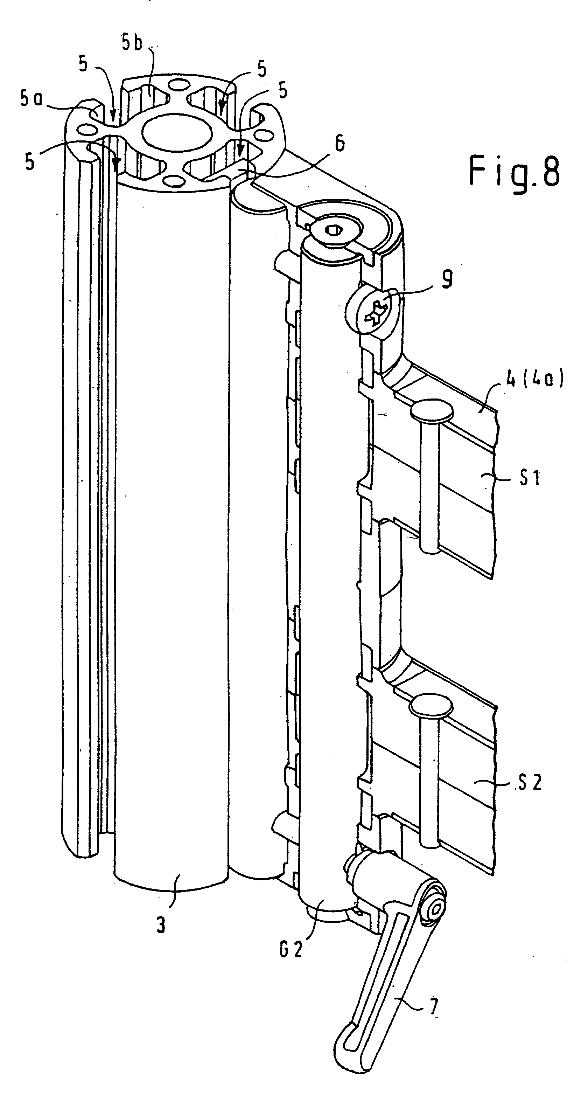

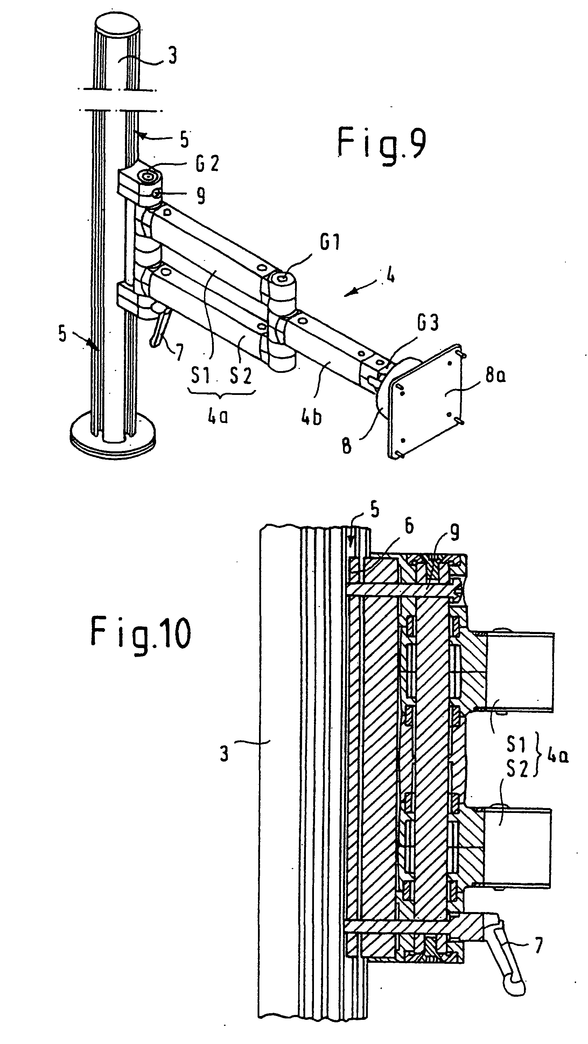

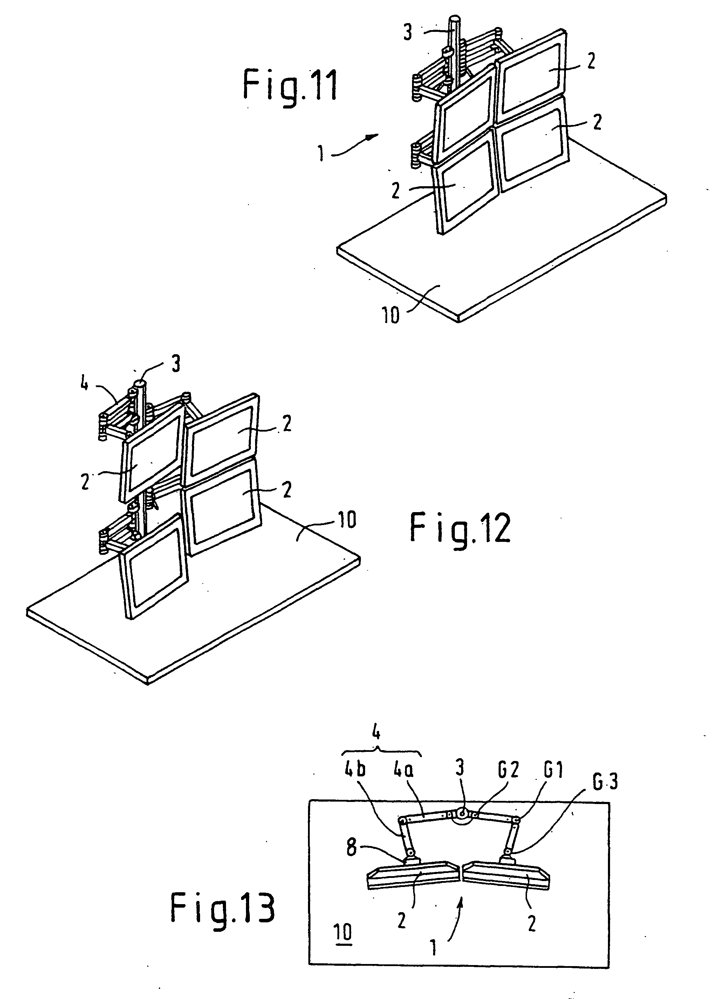

Die in Fig. 8 bis 13 dargestellte zweite Ausführung des erfindungsgemäßen Systems zur Bildung einer Standwand 1 für Flachbildschirmgeräte 2 unterscheidet sich nur geringfügig von der ersten Ausführung. Der vorhandene Unterschied ist dabei insbesondere dadurch begründet, daß die zweite Ausführung besonders für schwerere Flachbildschirmgeräte 2 geeignet ist, während die erste Ausführung für leichtere Flachbildschirmgeräte 2 zum Einsatz kommen kann. Dementsprechend umfassen die beiden Varianten der unter Verwendung der zweiten Ausführung des erfindungsgemäßen Systems gebildeten Standwände 1 für Flachbildschirmgeräte 2 (Fig. 11 bis 13) jeweils nur zwei nebeneinander angeordnete "Spalten" von Flachbildschirmgeräten 2. Um die Tragfähigkeit des Befestigungsarmes 4 zu erhöhen, ist in der zweiten Ausführung der ständemahe Hebelabschnitt 4a als Doppelstab (zwei Einzelstäbe S1, S2) ausgebildet, was insbesondere durch Fig. 9, aber auch durch Fig. 8 und 10 bis 12 verdeutlicht wird.

Die in den Figuren 14 bis 16 dargestellte Variante der Feststellvorrichtung ist im Gegensatz zur in Fig. 4 gezeigten Ausführungsform als Schnellspannvorrichtung 20 ausgebildet.

Die Schnellspannvorrichtung 20 des erfindungsgemäßen Systems weist einen leicht stumpfwinklig abgewinkelten Nutstein 6 auf, der ebenfalls, wie vorher beschrieben, in einer der Führungsnuten 5 mit den Hinterschneidungen 5a, 5b des Ständers 3 zusammenwirkt (vgl. Fig. 1).

An Stelle des Schraubenbolzens 9 (Fig. 4), der eine Vorarretierung bewirkt, die ab Werk eingestellt werden muss, weist die Schnellspannvorrichtung 20 ein ab Werk festeingestelltes bzw. festgelegtes Befestigungselement 21 auf wie nachfolgend erläutert wird.

Das Befestigungselement 21 ist (oberhalb des Befestigungsarmes 4) einerseits in der Führungsnut 5 mit dem abgewinkelten Nutstein 6 und andererseits ausserhalb der Führungsnut 5 mit einem ersten (oberen) Anlageteil 22 mittel- oder unmittelbar verbunden. Zur Verbindung mit dem Nutstein 6 ist das Befestigungselement 21 mit einem Befestigungskopf 23 versehen, der den Nutstein 6 an einem (oberen) Ende greift.

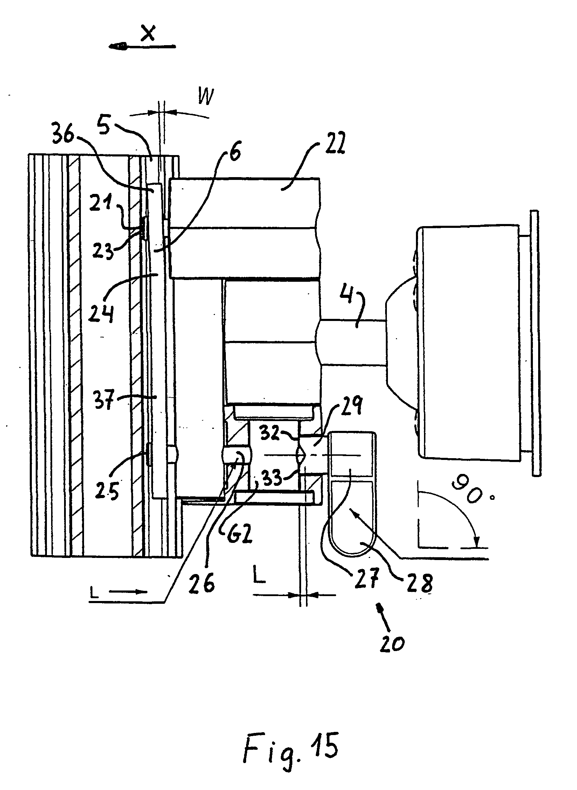

Ab etwa ¼ bis ¹/₃ der Nutsteinlänge von dem (oberen) befestigungselementnahem Nutsteinende aus gesehen, ist der Nutstein 6 mit einer Knickstelle 24 bzw. einer quer zur Längsachse liegenden Biegestelle versehen, so dass der Nutstein 6 einen kurzen Schenkel 36 und einen langen Schenkel 37 aufweist. Der kurze Schenkel 36 des Nutsteines 6 verläuft in einer gelösten Stellung parallel zur Führungsnut 5, wie in Fig. 14 veranschaulicht ist. In der gelösten Stellung kann der Nutstein 6 innerhalb der Führungsnut 5 verschoben werden. Wie ein Vergleich der Fig. 14 und 15 zeigt, wobei Fig. 15 eine Arretierungsstellung zeigt, ist der Nutstein 6 wippenartig in der Führungsnut 5 angeordnet, und die Knickstelle 24 liegt stets an den Hinterschneidungen 5a, 5b (Fig. 1) an. Der kurze Schenkel 36 kann von der gelösten Stellung (Fig. 14) in Pfeilrichtung X in eine Arretierungsstellung (Fig. 15) bewegt bzw. um die Knickstelle 24 geschwenkt werden. In der Arretierungsstellung verläuft der kurze Schenkel 36 unter einem Winkel W (Fig. 15) innerhalb der Führungsnut 5. Dadurch kann über das Befestigungselement 21 ein Anlageteil 22 angezogen werden, so dass dieses Anlageteil 22 fest an der Säule 3 anliegt. Der lange Schenkel 37 des Nutsteines 6 verläuft dagegen in der gelösten Stellung (Fig. 14) unter dem Winkel W innerhalb der Führungsnut 5 und erst in der Arretierungsstellung (Fig. 15) parallel zur Führungsnut 5, wobei durch einen Arretierungsvorgang der lange Schenkel 37 innerhalb der Führungsnut entgegen der Pfeilrichtung X bewegt bzw. um die Knickstelle 24 geschwenkt wird.

An dem dem Befestigungselement 21 gegenüberliegenden Nutsteinende ist der Nutstein 6 an seinem langem Schenkel 37 mit einem als Schnellspannbolzen 26 ausgebildeten Klemmbolzen mittels eines Bolzenkopfes 25 innerhalb der Führungsnut 5 verbunden, wie in Fig. 15 veranschaulicht ist. Der Schnellspannbolzen 26 ragt aus der Führungsnut 5 und durchdringt Teile des Gelenkes G2, ähnlich der gemäß Fig. 4 beschriebenen Ausführungsform. Am gegenüberliegenden Ende des Bolzenkopfes 25 ist der Schnellspannbolzen 26 mit einem Schnellspannhebel 27 ausserhalb der Führungsnut 5 fest verbunden. Der Schnellspannhebel 27 besteht aus einer um 90 ° drehbaren Handhabe 28 und einer im Verbindungsbereich zwischen Schnellspannbolzen 26 und Handhabe 28 angeordneten Spannkontur 29, die an der Handhabe 28 befestigt, vorzugsweise einstückig verbunden ist und um 90 ° mit dieser drehbar ist. Die Spannkontur 29 wirkt mit einem im Querschnitt insbesondere runden Teil, vorzugsweise einem Gelenkbolzen 30 des Gelenkes G2 zusammen. Sie liegt am Aussenumfang des Gelenkbolzens 30 an, wie in den Figuren 14 und 15 veranschaulicht ist. Die Spannkontur 29 ist vorzugsweise etwa dreieckförmig eingesenkt und mit zwei äusseren Anlagekanten 32, 33 versehen. Je nachdem in welcher Stellung die Handhabe 28 positioniert ist, liegen die Anlagekanten 32, 33 parallel (Fig. 14) zu der Gelenkachse des Gelenkes G2 oder quer (Fig. 15) zu ihr.

Wie in Fig. 14 zu sehen ist, liegt in der gelösten Stellung der Gelenkbolzen 30 innerhalb der Spannkontur 29, so dass zwischen der tiefsten Stelle der Spannkontur 29 und dem Gelenkbolzen 30 ein kleiner Abstand L entsteht. Nach einer 90 ° Drehung, wie in Fig. 15 dargestellt ist, vergrößert sich der Abstand L, wobei der Gelenkbolzen 30 dann auf den Anlagekanten 32, 33 liegt. Hierdurch erfolgt eine Bewegung des Schnellspannbolzens 26, wobei der lange Schenkel 37 des Nutsteins 6 entgegengesetzt zur Pfeilrichtung X bewegt und der kurze Schenkel 36 in Pfeilrichtung X mitgenommen wird.

Die Schnellspannvorrichtung 20 funktioniert folgendermaßen:

In der gelösten Stellung (Fig. 14) liegt der Nutstein 6 entspannt in der Führungsnut 5, so dass ein Verschieben des Befestigungsarmes 4 entlang der Säule 3 möglich ist. In dieser Stellung liegt der kurze Schenkel 36 des Nutsteins 6 im Wesentlichen parallel zu den Hinterschneidungen 5a, 5b. Der lange Schenkel 37 ist von den Hinterschneidungen 5a, 5b beabstandet.

Wird die Handhabe 28 um 90 ° betätigt, dann wird der Nutstein 6 hebelartig derart bewegt, dass einerseits das (obere) Anlageteil 22 gegen den Ständer 3 gezogen wird, und andererseits der lange Schenkel 37 an die Hinterschneidungen 5a, 5b ebenfalls gezogen wird, wobei ein sehr langer Anlagebereich des Nutsteins 6 gegeben ist. Hierdurch entfällt im Grunde eine Voreinstellung des (oberen) Befestigungselementes, wie eingangs erwähnt.

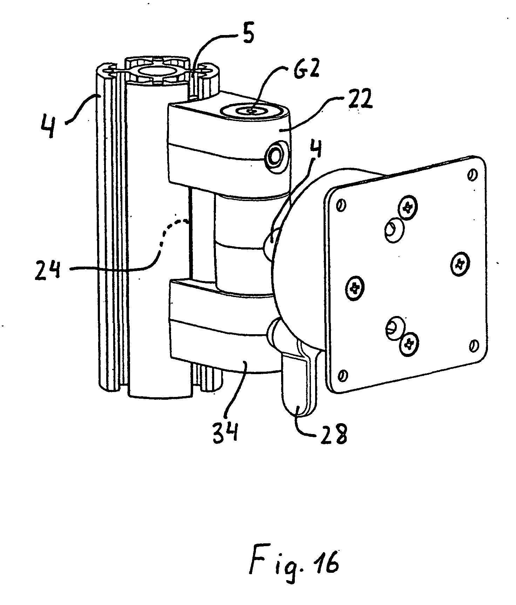

Zusätzlich wird durch den größeren Abstand L sowohl ein unteres Anlageteil 34 (Fig. 16) gegen die Säule 4 gedrückt, als auch der Nutstein 6 (unten) gegen die Hinterschneidungen 5a, 5b gedrückt.

Die Erfindung ist nicht auf die dargestellten Ausführungsbeispiele beschränkt, sondern umfaßt auch alle im Sinne der Erfindung gleichwirkenden Ausführungen. So kann z.B. das Querschnittsprofil des Ständers 3 auch von der dargestellten Ausführung abweichen. Die Befestigungsmittel werden, wie vorstehend beschrieben, im wesentlichen durch die Befestigungsarme 4, den Nutstein 6 einschließlich des Klemmbolzens 7 und des Schraubbolzens 9 sowie durch das Montageteil 8 mit der Verbindungseinrichtung 8a gebildet. Auch hier sind andersartige Gestaltungsmöglichkeiten gegeben, ohne daß der Rahmen der Erfindung verlassen wird. Des weiteren kann der Fachmann ergänzend zusätzliche vorteilhafte technische Maßnahmen vorsehen, wie sie beispielsweise die Befestigung des Ständers 3 auf einer Basis 10 betreffen.

### Bezugszeichen

- 1: Standwand aus 2
- 2: Flachbildschirmgerät
- 3: Ständer
- 4: Befestigungsarm
- 4a, 4b: Hebelabschnitte von 4
- 5: Führungsnuten
- 5a, 5b: Hinterschneidungen von 5
- 6: Nutstein
- 7: Klemmbolzen für 6
- 8: Montageteil
- 8a: Verbindungseinrichtung
- 9: Schraubbolzen für 6
- 10: Basis für 3

- DH: Höhenversatz von 2
- G1: Gelenk zwischen 4a und 4b
- G2, G3: Gelenke an den Enden von 4
- H: Höhe von 2
- S1, S2: Einzelstäbe des Doppelstabes
- L: Abstand

- 20: Schnellspannvorrichtung
- 21: Befestigungselement
- 22: Anlageteil (oberes)
- 23: Befestigungskopf
- 24: Knickstelle
- 25: Bolzenkopf
- 26: Spannbolzen
- 27: Schnellspannhebel
- 28: Handhabe
- 29: Spannkontur
- 30: Gelenkbolzen
- 32, 33: Anlagekanten
- 34: Anlageteil (unteres)
- 36: kurzer Schenkel
- 37: langer Schenkel

## Patentansprüche

1. System zur Bildung einer Standwand (1) für Flachbildschirmgeräte (2), umfassend einen säulenartigen Ständer (3) sowie Befestigungsmittel (4, 6, 7, 8, 9) zur stufenlosen höhenverstellbaren Befestigung von Gegenständen, wie Befestigungsarme (4) für die Flachbildschirmgeräte (2), wobei der Ständer (3) in seiner Umfangskontur mindestens zwei parallel in Ständerlängsrichtung verlaufende, Hinterschneidungen (5a, 5b) der Umfangskontur des Ständers (3) ausbildende Führungsnuten (5) aufweist und die Befestigungsmittel (4, 6, 7, 8, 9), die in den Führungsnuten (5) geführt sind und mit den Führungsnuten (5) zusammenwirken, als Klemmmittel zur kraftschlüssigen Befestigung einen formschlüssig an den Querschnitt der Führungsnuten (5) angepaßten Nutstein (6) umfassen, der jeweils mittels eines Klemmbolzens (7) in einer Führungsnut (5) arretierbar ist, wobei die Führungsnuten (5) derart gegeneinander versetzt sind, daß zumindest zwei zu befestigende Gegenstände separat voneinander in beliebigen Höhenpositionen am Ständer (3) befestigbar sind,
**dadurch gekennzeichnet, daß** der Nutstein (6) mittels zweier mit einem Befestigungsarm (4) verbundener Befestigungselemente (7, 9) in der Führungsnut (5) gehalten wird, wobei die Befestigungselemente (7, 9) aus einem im oberen Bereich des Nutsteins (6), insbesondere oberhalb des Befestigungsarmes (4), endseitig mit dem Nutstein (6) verschraubten Schraubbolzen (9) und dem im unteren Bereich des Nutsteins (6), insbesondere unterhalb des Befestigungsarmes (4), verschraubten Klemmbolzen (7) gebildet sind, wobei der Schraubbolzen (9) den Nutstein (6) längsbeweglich in der Führungsnut (5) hält, solange der Klemmbolzen (7) nicht angezogen ist.

2. System nach Anspruch 1,
**gekennzeichnet durch** drei oder mehr, vorzugsweise vier jeweils um 90° gegeneinander versetzte, Führungsnuten (5).

3. System nach Anspruch 1 oder 2,
**dadurch gekennzeichnet, daß** der Nutstein (6) bezüglich einer quer zur Längsachse bzw. Säulenachse liegenden Achse stumpfwinklig abgewinkelt ist.

4. System nach einem der Ansprüche 1 bis 3,
**dadurch gekennzeichnet, daß** ein Befestigungselement (21) als Schnellspannbolzen (26) mit einer Spannkontur (29) vorhanden ist.

5. System nach den Ansprüchen 3 oder 4,
**dadurch gekennzeichnet, daß** der Nutstein (6) derart mit einem kurzen Schenkel (36) und einem langen Schenkel (37) versehen ist und derart mit dem Schnellspannbolzen (26) zusammenwirkt, daß eine hebelartige Kraftübertragung auf ein Befestigungselement (21) erfolgt, welches an einem dem Schnellspannbolzen (26) gegenüberliegenden Nutsteinende angeordnet ist.

6. System nach einem der Ansprüche 1 bis 5,
**dadurch gekennzeichnet, daß** der Ständer (3) als Hohlprofil ausgebildet ist.

7. System nach einem der Ansprüche 1 bis 6,
**gekennzeichnet durch** am Ständer (3) festlegbare Befestigungsarme (4), die jeweils aus zwei Hebelabschnitten (4a, 4b) gebildet sind, die gelenkig miteinander verbunden sind.

8. System nach Anspruch 7,
**dadurch gekennzeichnet, daß** mindestens ein Hebelabschnitt (4a) als Doppelstab (S1, S2) ausgebildet ist.

9. System nach einem der Ansprüche 1 bis 8,
**dadurch gekennzeichnet, daß** an jedem Befestigungsarm (4), an mindestens einem seiner Enden, vorzugsweise an beiden Enden, (ein) Verbindungsgelenk(e) (G2, G3) zur mittelbaren oder unmittelbaren gelenkigen Befestigung am Ständer (3) und/oder am Flachbildschirmgerät (2) angeordnet ist/sind.

10. System nach Anspruch 9,
**dadurch gekennzeichnet, daß** ein Verbindungsgelenk (G2) des Befestigungsarmes (4) zur gelenkigen Befestigung am Ständer (3) als Scharniergelenk ausgebildet ist.

11. System nach Anspruch 9 oder 10,
**dadurch gekennzeichnet, daß** ein Verbindungsgelenk (G3) des Befestigungsarmes (4) zur gelenkigen Befestigung am Flachbildschirmgerät (2) als Kugel- oder Kardangelenk ausgebildet ist.

12. System nach einem der Ansprüche 1 bis 11,
**gekennzeichnet durch** eine am Befestigungsarm (4) gelenkig gehalterte Schnellverbindungsplatte zur Befestigung des Flachbildschirmgerätes (2).

13. System nach einem der Ansprüche 1 bis 12,
**dadurch gekennzeichnet, daß** die Befestigungsarme (4) für die Flachbildschirmgeräte (2) derart am Ständer (3) montiert sind, daß nebeneinander angeordnete Flachbildschirmgeräte (2) einen Höhenversatz (DH) aufweisen, der kleiner ist, als die Höhe (H) eines Flachbildschirmgerätes (2).

## Claims

1. A system for forming a standing wall (1) for flat screen devices (2), including an upright (3) shaped in the manner of a column and securing means (4, 6, 7, 8, 9) for the continuously vertically adjustable securing of articles, such as securing arms (4) for the flat screen devices (2), where the upright (3) has in its peripheral contour at least two guide slots (5) which extend parallel and in the longitudinal direction of the upright and form undercuts (5a, 5b) of the peripheral contour of the upright (3), and the securing means (4, 6, 7, 8, 9), which are guided in the guide slots (5) and cooperate with the guide slots (5), include a slot block (6), acting as a clamping means for securing in force-fitting manner, which is matched in form-fitting manner to the cross-section of the guide slots (5) and which is lockable in a guide slot (5) in each case by means of a clamping bolt (7), with the guide slots (5) offset from one another such that at least two articles to be secured are securable separately from one another at any vertical positions on the upright (3),
**characterised in that** the slot block (6) is held in the guide slot (5) by means of two securing elements (7, 9) which are connected to a securing arm (4), with the securing elements (7, 9) being formed by a screw (9) screwed at its end to the slot block (6) in the upper region of the slot block (6), in particular above the securing arm (4), and by the clamping bolt (7) screwed into the lower region of the slot block (6), in particular below the securing arm (4), with the screw (9) holding the slot block (6) such that it is longitudinally movable in the guide slot (5) while the clamping bolt (7) is not tightened.

2. A system according to Claim 1, **characterised by** three or more, preferably four, guide slots (5) which are each offset from one another by 90°.

3. A system according to Claim 1 or 2, **characterised in that** the guide slot (6) is angled at an obtuse angle in relation to an axis lying transversely to the longitudinal axis or the axis of the column.

4. A system according to one of Claims 1 to 3, **characterised in that** a securing element (21) is provided, as a quick-clamping bolt (26), with a clamping contour (29).

5. A system according to Claims 3 or 4, **characterised in that** the slot block (6) is provided with a short limb (36) and a long limb (37), and cooperates with the quick-clamping bolt (26), such that there is a lever-like transmission of force to a securing element (21) which is arranged at an end of the slot block opposite the quick-clamping bolt (26).

6. A system according to one of Claims 1 to 5, **characterised in that** the upright (3) is in the form of a hollow profiled part.

7. A system according to one of Claims 1 to 6, **characterised by** securing arms (4) which may be fixed to the upright (3) and are in each case formed by two lever sections (4a, 4b) which are connected to one another in articulated manner.

8. A system according to Claim 7, **characterised in that** at least one lever section (4a) is in the form of a double rod (S1, S2).

9. A system according to one of Claims 1 to 8, **characterised in that** there is or are arranged on each securing arm (4), at at least one of its ends, preferably at both ends, one or more connecting articulations (G2, G3) for direct or indirect articulated securing to the upright (3) and/or to the flat screen device (2).

10. A system according to Claim 9, **characterised in that** a connecting articulation (G2) of the securing arm (4) for articulated securing to the upright (3) is in the form of a hinge joint.

11. A system according to Claim 9 or 10, **characterised in that** a connecting articulation (G3) of the securing arm (4) for articulated securing to the flat screen device (2) is in the form of a ball or universal joint.

12. A system according to one of Claims 1 to 11, **characterised by** a quick-connection plate mounted in articulated manner on the securing arm (4), for securing the flat screen device (2).

13. A system according to one of Claims 1 to 12, **characterised in that** the securing arms (4) for the flat screen devices (2) are mounted on the upright (3) such that flat screen devices (2) which are arranged next to one another have a vertical offset (DH) which is smaller than the height (H) of a flat screen device (2).

## Revendications

1. Système pour former une paroi verticale (1) pour des appareils à écrans plats (2) comprenant un support en forme de colonne (3) ainsi que des moyens de fixation (4, 6, 7, 8, 9) pour permettre une fixation continue et réglable en hauteur d'objets, tels que des bras de fixation (4) pour les appareils à écrans plats (2), alors que le support (3) comprend sur son contour circulaire au moins deux rainures de guidage (5) s'étendant parallèlement dans la direction longitudinale du support et formant des parties creuses (5a, 5b) du contour circulaire du support (3) et que les moyens de fixation (4, 6, 7, 8, 9) qui sont guidés dans les rainures de guidage (5) et qui agissent de concert avec les rainures de guidage (5) comportent comme moyen de blocage pour une fixation en complémentarité de force un coulisseau de rainure (6) adapté en complémentarité de forme à la section des rainures de guidage (5) et pouvant être bloqué respectivement au moyen d'un goujon de blocage (7) dans une rainure de guidage (5) et alors que les rainures de guidage (5) sont décalées de telle façon entre elles qu'au moins deux objets à fixer puissent être immobilisés sur le support (3) séparément l'un de l'autre et dans des positions en hauteur quelconques,
**caractérisé en ce que** le coulisseau de rainure (6) est maintenu dans la rainure de guidage (5) au moyen de deux éléments de fixation (7, 9) reliés au moyen d'un bras de fixation (4), alors que les éléments de fixation (7, 9) sont formés par un goujon fileté (9) qui, dans la zone supérieure du coulisseau de rainure (6), en particulier au-dessus du bras de fixation (4), est vissé du côté terminal sur le coulisseau de rainure (6) et par le goujon de blocage (7) qui est vissé dans la zone inférieure du coulisseau de rainure (6), en particulier au-dessous du bras de fixation (4) et alors que, tant que le goujon de blocage (7) n'est pas serré, le goujon fileté (9) maintient le coulisseau de rainure (6) dans la rainure de guidage (5) avec une possibilité de déplacement dans le sens longitudinal.

2. Système selon la revendication 1, **caractérisé par** trois ou plus, de préférence quatre, rainures de guidage (5) respectivement décalées de 90° entre elles.

3. Système selon la revendication 1 ou 2, **caractérisé en ce que** le coulisseau de rainure (6) est recourbé avec un angle obtus par rapport à un axe s'étendant transversalement à l'axe longitudinal ou à l'axe de la colonne.

4. Système selon l'une quelconque des revendications 1 à 3, **caractérisé en ce qu'**il existe un élément de fixation (21) réalisé comme goujon de serrage rapide (26) et comportant un contour de serrage (29).

5. Système selon les revendications 3 ou 4, **caractérisé en ce que** le coulisseau de rainure (6) est muni de telle façon d'une branche courte (36) et d'une branche longue (37) et est en interaction telle avec le goujon de serrage rapide (26) qu'ait lieu une transmission de force par effet de levier sur un élément de fixation (21) qui est disposé sur une extrémité du coulisseau de rainure opposée au goujon de serrage rapide (26).

6. Système selon l'une quelconque des revendications 1 à 5, **caractérisé en ce que** le support (3) est configuré comme profilé creux.

7. Système selon l'une quelconque des revendications 1 à 6, **caractérisé par** des bras de fixation (4) pouvant être immobilisés sur le support (3) et qui sont formés respectivement de deux sections de levier (4a, 4b) qui sont reliées de manière articulée entre elles.

8. Système selon la revendication 7, **caractérisé en ce qu'**au moins une section de levier (4a) est configurée comme barre double (S1, S2).

9. Système selon l'une quelconque des revendications 1 à 8, **caractérisé en ce que** sur chaque bras de fixation (4), à au moins une de ses extrémités, de préférence aux deux extrémités, est(sont) disposée(s) une(des) articulation(s) de liaison (G2, G3) pour assurer une fixation articulée directe ou indirecte sur le support (3) et/ou sur l'appareil à écran plat (2).

10. Système selon la revendication 9, **caractérisé en ce qu'**une articulation de liaison (G2) du bras de fixation (4) est configurée comme articulation à charnière pour assurer une fixation articulée sur le support (3).

11. Système selon la revendication 9 ou 10, **caractérisé en ce qu'**une articulation de liaison (G3) du bras de fixation (4) est configurée comme articulation à billes ou à cardan pour assurer une fixation articulée sur l'appareil à écran plat (2).

12. Système selon l'une quelconque des revendications 1 à 11, **caractérisé par** une plaque de liaison rapide qui est maintenue de manière articulée sur le bras de fixation (4) et qui sert à la fixation de l'appareil à écran plat (2).

13. Système selon l'une quelconque des revendications 1 à 12, **caractérisé en ce que** les bras de fixation (4) pour les appareils à écrans plats (2) sont montés de telle façon sur le support (3) que des appareils à écrans plats (2) disposés l'un à côté de l'autre présentent un décalage en hauteur (DH) qui est plus petit que la hauteur (H) d'un appareil à écran plat (2).
